(19) Europäisches Patentamt
European Patent Office
Office européen des brevets

(11) **EP 4 502 519 A1**

(12) **EUROPEAN PATENT APPLICATION**
published in accordance with Art. 153(4) EPC

(43) Date of publication:
**05.02.2025 Bulletin 2025/06**

(21) Application number: **23779986.1**

(22) Date of filing: **22.03.2023**

(51) International Patent Classification (IPC):
*F28D 1/06* (2006.01)   *F28D 20/00* (2006.01)

(52) Cooperative Patent Classification (CPC):
**F28D 1/06; F28D 20/00;** Y02E 60/14

(86) International application number:
**PCT/JP2023/011327**

(87) International publication number:
**WO 2023/189974 (05.10.2023 Gazette 2023/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **30.03.2022 JP 2022057455**

(71) Applicant: **Tomoegawa Corporation
Tokyo 104-8335 (JP)**

(72) Inventors:
• **HATANO, Shuhei**
  **Shizuoka-shi, Shizuoka 421-0192 (JP)**
• **MORIUCHI, Hideki**
  **Shizuoka-shi, Shizuoka 421-0192 (JP)**

(74) Representative: **Hoffmann Eitle
Patent- und Rechtsanwälte PartmbB
Arabellastraße 30
81925 München (DE)**

(54) **TEMPERATURE EQUALIZING UNIT**

(57)   Provided is a temperature equalizing unit capable of equalizing a temperature of a heat medium flowing through a passage. The temperature equalizing unit includes: at least one inorganic fiber member 16 formed by binding or entangling inorganic fibers to have a desired shape; a heat storage material 18 contacting the inorganic fiber member 16; and a storage body 14 disposed in contact with a passage 12 through which water 28 flows, with the inorganic fiber member 16 and the heat storage material 18 being stored therein, in which a volume of the inorganic fiber member 16 in the storage body 14 is 30 to 70 vol%.

## FIG.1

EP 4 502 519 A1

## Description

### TECHNICAL FIELD

The present invention relates to a temperature equalizing unit capable of suppressing a fluctuation in temperature of a heat medium.

### BACKGROUND ART

Patent Literature 1 to be described below discloses a heat storage unit for adjusting a heat source to a desired temperature. The heat storage unit disclosed in Patent Literature 1 includes a sealing container, a heat storage material sealed in the sealing container, and the like.

Patent Literature 1 discloses a plurality of embodiments related to heat storage units. In a first embodiment (Fig. 1), a sealing container (11) is made of a flexible material. In a second embodiment (Fig. 7), a sealing container (31) has a rectangular parallelepiped shape, and is made of a thermally conductive material. In a third embodiment (Fig. 12), a heat storage unit (3') is used for a cylindrical heat source, and in a fourth embodiment (Fig. 14), a heat storage unit (3") is used for a pipe through which a thermal fluid flows.

### CITATION LIST

Patent Literature

Patent Literature 1: JP 2017-75773 A

### SUMMARY OF INVENTION

Technical Problem

The inventors have come up with an idea that a temperature change of a heat medium such as air or water is reduced by a heat storage material to equalize a temperature. Further, the inventors have found Patent Literature 1 as a prior art document. However, Patent Literature 1 discloses that heat of the heat source is transferred to the heat storage unit, not considering equalizing the temperature of the heat medium flowing through the passage.

An object of the present invention is to provide a temperature equalizing unit capable of equalizing a temperature of a heat medium flowing through a passage.

Solution to Problem

The temperature equalizing unit according to the present invention includes at least one inorganic fiber member formed by binding or entangling inorganic fibers to have a desired shape, a heat storage material contacting the inorganic fibers; and a storage body disposed in contact with a passage through which a heat medium flows, with the inorganic fiber member and the heat storage material being stored therein. A volume of the inorganic fiber member in the storage body is 30 to 70 vol%.

Advantageous Effects of Invention

According to the present invention, it is possible to provide a temperature equalizing unit capable of equalizing a temperature of a heat medium flowing through a passage.

### BRIEF DESCRIPTION OF DRAWINGS

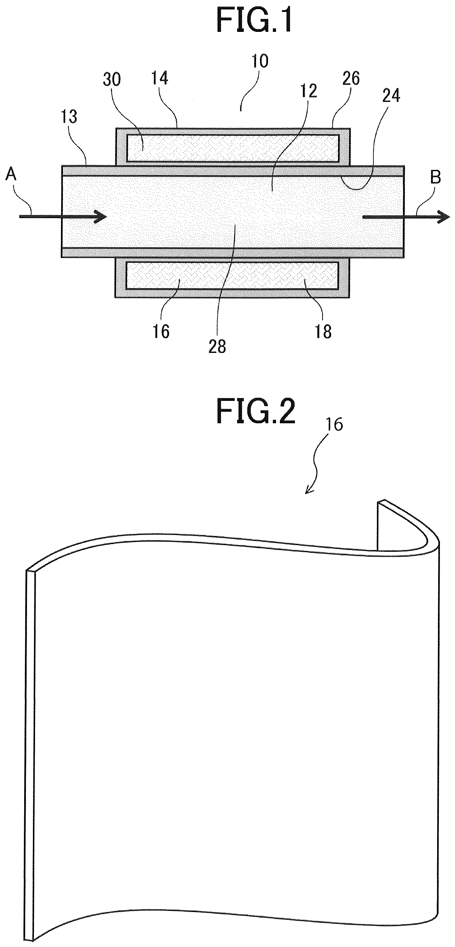

Fig. 1 is an explanatory view schematically illustrating a cross section of a temperature equalizing unit according to a first embodiment.
Fig. 2 is a schematic view illustrating an appearance of a sheet-like inorganic fiber member.

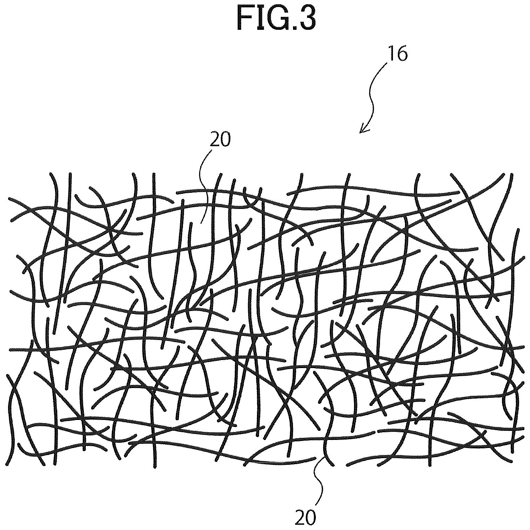

Fig. 3 is a schematic enlarged view of an inorganic fiber member 16 illustrating a microscopic state of inorganic fibers 20.

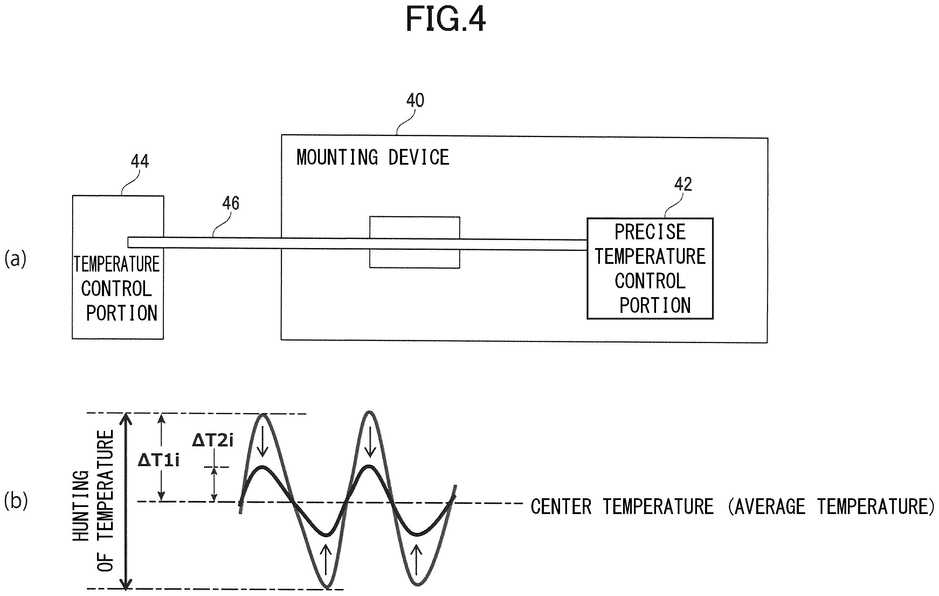

Fig. 4(a) is a schematic configuration diagram illustrating an example of use of a temperature equalizing unit, and Fig.

4(b) is an explanatory view illustrating an example of a temperature change.

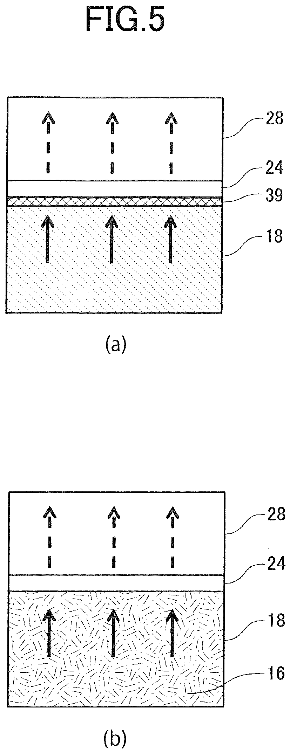

Fig. 5(a) is an explanatory view schematically illustrating a function of a heat storage material alone, and Fig. 5(b) is an explanatory view schematically illustrating a function in a case where an inorganic fiber member is added to the heat storage material.

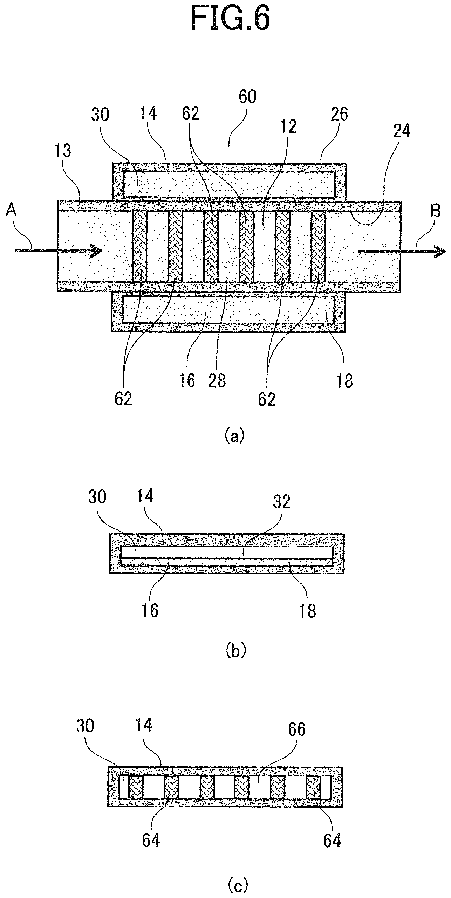

Fig. 6 is an explanatory view schematically illustrating a cross section of a temperature equalizing unit 60 according to a second embodiment.

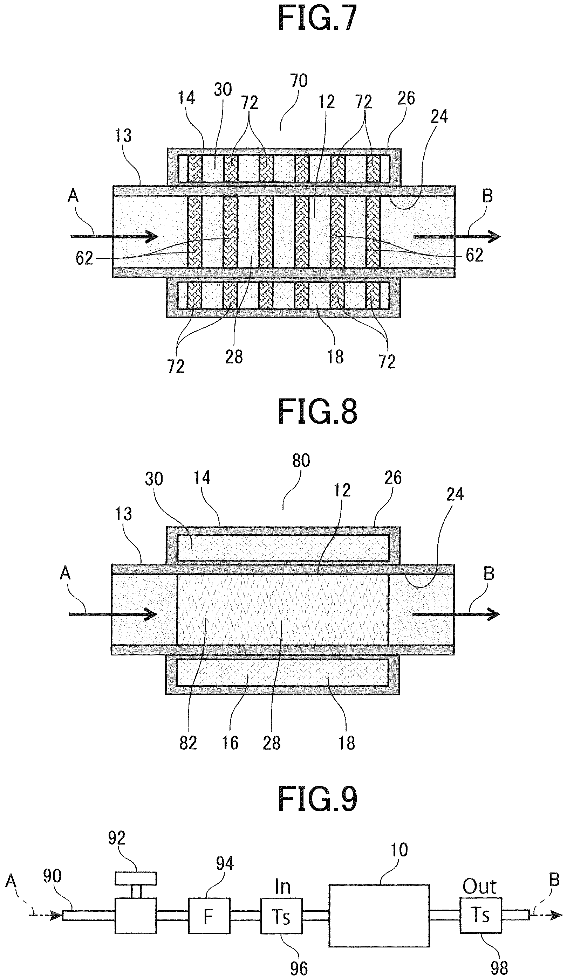

Fig. 7 is an explanatory view schematically illustrating a cross section of a temperature equalizing unit 70 according to a third embodiment.

Fig. 8 is an explanatory view schematically illustrating a cross section of a temperature equalizing unit 80 according to a fourth embodiment.

Fig. 9 is a schematic configuration diagram illustrating a configuration of an experimental apparatus used for comparing temperature equalization characteristics.

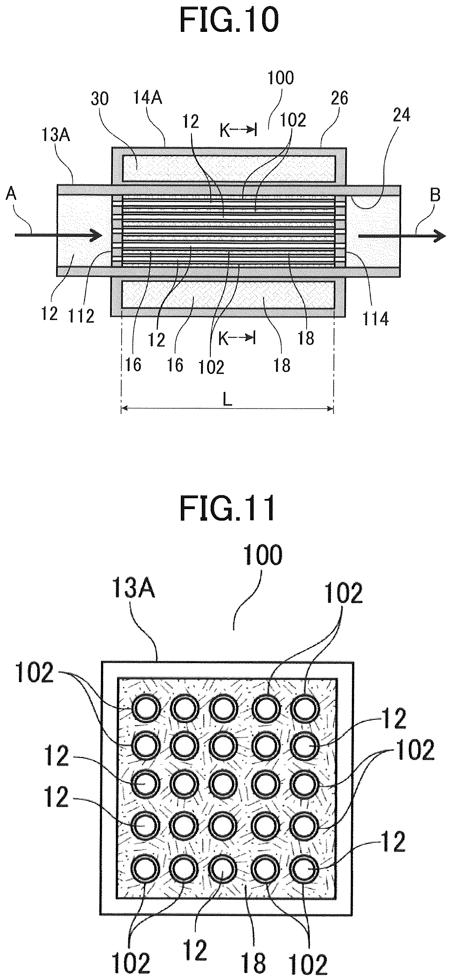

Fig. 10 is an explanatory view schematically illustrating a cross section of a temperature equalizing unit 100 according to a fifth embodiment.

Fig. 11 is an explanatory view schematically illustrating a cross section taken along line K-K of Fig. 10.

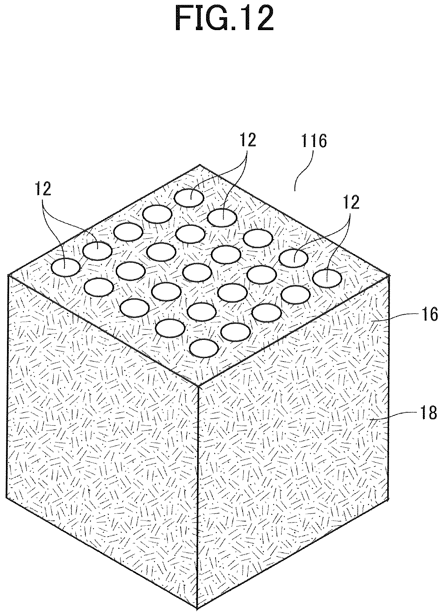

Fig. 12 is a perspective view schematically illustrating a modification of an inorganic fiber member 16 according to the fifth embodiment.

DESCRIPTION OF EMBODIMENTS

Hereinafter, preferred embodiments of the present invention will be described in detail with reference to the drawings. A temperature equalizing unit according to each embodiment and characteristics thereof will be described in the following order.

1. Temperature Equalizing Unit 10 of First Embodiment
1-1. Inorganic Fiber Member 16
1-2. Heat Storage Material 18
1-3. Basic Function of Temperature Equalizing Unit 10
1-4. Effect of Heat Storage Material 18
1-5. Effect of Inorganic Fiber Member 16
1-6. Effect of Temperature Equalizing Unit 10
2. Improvement in Thermal Conductivity by Addition of Inorganic Fiber Member 16
3. Temperature Equalizing Unit 60 of Second Embodiment
4. Temperature Equalizing Unit 70 of Third Embodiment
5. Temperature Equalizing Unit 80 of Fourth Embodiment
6. Comparison Between Characteristics of First to Third Embodiments
7. Comparison Between Characteristics of Second to Fourth Embodiments
8. Temperature Equalizing Unit 100 of Fifth Embodiment
9. Setting of Center Temperature of Heat Storage Material

<Temperature Equalizing Unit 10 of First Embodiment>

Fig. 1 schematically illustrates a basic configuration of a temperature equalizing unit 10 according to a first embodiment. The temperature equalizing unit 10 includes a passage tube 13 in which a passage 12 allowing a heat medium to flow therethrough is formed, and a storage body (also referred to as a "heat storage material unit") 14 disposed in contact with the outside of the passage tube 13. The heat medium is not particularly limited as long as it is a fluid to be subjected to temperature equalization, but various fluids such as air, gas, water, and an aqueous solution can be adopted. In the example of Fig. 1, the heat medium is water 28. The heat medium can be rephrased as, for example, a hot medium or a temperature medium.

In Fig. 1, hatching or shading for distinguishing the water 28 from other components is omitted to avoid complicating the illustration. The hatching or shading of the water 28 is also omitted in the same manner in the other embodiments to be described below.

Although will be described in detail below, the storage body 14 stores an inorganic fiber member 16, which is schematically illustrated (Figs. 2 and 3), and a heat storage material 18. The inorganic fiber member 16 is formed by binding or entangling inorganic fibers 20 (Fig. 3) to have a desired shape. At least one inorganic fiber member 16 is disposed in the storage body 14. The heat storage material 18 is in contact with the inorganic fibers 20. The volume of the inorganic fiber member 16 in the storage body 14 is 30 to 70 vol% (storage body occupancy ratio). Here, the volume of the inorganic fiber member 16 refers to a volume converted into a bulk density, and the volume of the inorganic fiber member 16 includes voids between the inorganic fibers 20.

In Fig. 1, reference numeral 24 denotes an inner wall of the passage tube 13, and reference numeral 26 denotes an outer wall of the storage body 14. Both the passage tube 13 and the storage body 14 have a circular tube shape, and the storage body 14 is concentrically disposed outside the passage tube 13. Furthermore, the storage body 14 has a hollow double-tube shape. A passage 12 is formed inside the inner wall 24 of the passage tube 13. The passage 12 is a space having a perfect circular cross section and extending linearly. Water 28, which is a heat medium, flows into the passage 12 as indicated by an arrow A. The water 28 fills the passage 12 and flows out from the passage 12 as indicated by an arrow B.

The passage tube 13 and the storage body 14 are provided to transfer heat therebetween. Note that the inner wall 24 of the passage tube 13 can be coated with a coating having a heat transferring function or a corrosion-resistance enhancing function.

The temperature equalizing unit 10 reduces the temperature change of the water 28 exiting from the passage 12 with respect to the amount of temperature change (temperature change amount) of the water 28 entering the passage 12. That is, the temperature equalizing unit 10 exhibits a function of equalizing the temperature of the input water and making the temperature change amount smaller than the temperature change amount of the input water.

Such an effect of equalizing the temperature (temperature equalization effect) can be obtained without disposing the inorganic fiber member 16 and the heat storage material 18 in the storage body 14, but is enhanced by using the inorganic fiber member 16 and the heat storage material 18. The temperature equalization effect using the inorganic fiber member 16 and the heat storage material 18 will be described in detail below.

The inorganic fiber member 16 and the heat storage material 18 are stored in a space (hereinafter, referred to as a "storage space", and denoted by reference numeral 28) of the storage body 14. The storage space 30 is a cylindrical sealed space. The storage space 30 is located outside the passage 12 in the radial direction. The storage body 14 has a so-called double-tube structure, with an inner wall and an outer wall connected to each other and maintaining a fixed positional relationship.

In the storage space 30, the heat storage material 18 enters the inside of the inorganic fiber member 16, for example, by an impregnating or embedding method or the like, and is integrated with the inorganic fiber member 16. The heat storage material 18 includes a portion that enters the inside of the inorganic fiber member 16, a portion exposed to an outer peripheral surface of the inorganic fiber member 16, and the like. The inorganic fiber member 16 also has a function as a carrier for the heat storage material 18.

The inorganic fiber member 16 and the heat storage material 18 are in contact with each other so as to enable heat transfer (also referred to as "heat exchange", "movement of heat", "interchange of heat", and the like.). In addition, the inorganic fiber member 16 and the heat storage material 18 are in contact with the storage body 14 so that heat can be transferred to the storage body 14. Heat is transferred between the inorganic fiber member 16 and the heat storage material 18 and the water in the passage 12 via the storage body 14, equalizing the temperature of the water. The inorganic fiber member 16 and the inner wall of the storage body 14 can be joined by a thermal fusion bonding method or the like.

Here, the passage tube 13 may be made of any material as long as it is capable of allowing water to flow through the passage 12 and allowing heat to be transferred between the water and the inorganic fiber member 16 and the heat storage material 18 in the storage body 14. As a material of the passage tube 13 and the storage body 14, stainless steel, aluminum, another metal, a combination thereof, or the like can be adopted.

The cross-sectional shape of the passage 12 is not limited to the perfect circular shape as long as a temperature related to a heat medium (here, water) can be equalized, and may be, for example, a triangular shape, a quadrangular shape, a pentagonal shape, another polygonal shape, an elliptical shape, an annular shape, or the like.

Although the cross section of the temperature equalizing unit 10 is illustrated in Fig. 1, it is shaded, while omitting the hatching of the passage tube 13, the storage body 14, and the like to avoid complicating the illustration. The hatching is also omitted in the same manner in the other embodiments to be described below.

Furthermore, in the first embodiment, the inorganic fiber member 16 and the heat storage material 18 are integrated, but this is expressed by shading in Fig. 1.

<<Inorganic Fiber Member 16>>

Fig. 2 is a schematic view illustrating an example of an appearance of the inorganic fiber member 16. The inorganic fiber member 16 can be formed in a desired shape. For example, as illustrated in Fig. 2, the inorganic fiber member 16 can be formed into a flexible sheet shape (a thin plate shape, a paper (sheet) shape, or the like).

In addition, the inorganic fiber member 16 can be formed into a block shape or the like by increasing the thickness and changing the aspect ratio of the cross section with respect to the inorganic fiber member 16 illustrated in Fig. 2. Furthermore, the inorganic fiber member 16 can also be formed into an elongated pin shape. In Fig. 2, the inorganic fiber member 16 has a constant thickness, but the thickness of the inorganic fiber member 16 is not necessarily constant.

The inorganic fiber member 16 may be flexed or bent. The inorganic fiber member 16 is not necessarily flexible, and may have high rigidity with no flexibility. The inorganic fiber member 16 can be formed into a desired shape and size by performing cutting processing or the like on the inorganic fiber member 16. The shape and size of the inorganic fiber member 16 can be appropriately selected on the basis of various factors such as a shape and size of a portion (space) where the inorganic fiber member 16 is to be disposed, a space factor in the space, the type of the heat storage material 18, a ratio with respect to the heat storage material 18, whether flexibility is required, a magnitude of the required flexibility, and the like.

In the first embodiment, the inorganic fiber member 16 is stored and filled in the storage space 30 of the storage body 14. The shape and size of the inorganic fiber member 16 are mainly determined based on a shape and size of the storage space 30, a space factor in the storage space 30, and a ratio with respect to the heat storage material 18 (to be described below).

Fig. 3 is an enlarged view of a part of the inorganic fiber member 16, schematically illustrating a microscopic state of the inorganic fiber member 16. The inorganic fiber member 16 is formed by binding or entangling parts of adjacent inorganic fibers 20. Each of the inorganic fibers 20 may be bonded or entangled at only one location, or may be bonded or entangled at a plurality of locations. By binding or entangling adjacent inorganic fibers 20, heat can be transferred successively across the plurality of inorganic fibers 20 that are bound or entangled to one another.

As described above, the inorganic fiber member 16 may be any inorganic fiber body formed of inorganic fibers 20, as long as the inorganic fibers are kept in a bound or entangled state to conduct heat, and its form such as shape and size is not limited.

Examples of the inorganic fiber member 16 include a sheet made by wet-processing inorganic fibers 20, an inorganic fiber sheet made by a known dry nonwoven fabric production method, and a sheet (e.g., mesh) with inorganic long fibers woven therein. Among them, the wet-processed fiber sheet is suitable because the sheet can be formed thin, and furthermore, the inorganic fibers 20 and the like are uniformly dispersed so that a dense network structure is formed, resulting in a uniform sheet with little variation in thickness and weight. By forming the inorganic fiber member 16 thin and uniform, a plurality of inorganic fiber members 16 can be included in a heat storage unit according to the present invention, and the heat can be stored and dissipated to enable uniform and rapid heat exchange in the heat storage unit as a whole.

Other additives can be added to the inorganic fiber member 16 as necessary. Examples of the additive include a binder and a thickener. Examples of the binder include an acrylic resin and polyvinyl alcohol.

During production, an inorganic fiber member 16 obtained by binding inorganic fibers 20 with a binder resin can be used, but this sheet can be formed of 100% inorganic fibers by sintering the inorganic fibers 20 at a temperature at which the inorganic fibers 20 are not completely melted in a vacuum or non-oxidizing atmosphere gas, thereby forming a strong sheet where the inorganic fibers 20 are fused to each other with no organic substance. When there are many bonds between the inorganic fibers 20, heat can be quickly transferred into the inorganic fibers 20, thereby making it possible to efficiently store and dissipate heat in the heat storage unit according to the present invention

The fiber diameter of the fibers used for the inorganic fiber member 16 is not particularly limited, but can be, for example, 1 $\mu$m to 50 $\mu$m, preferably 2 $\mu$m to 30 $\mu$m, and more preferably 3 $\mu$m to 20 $\mu$m.

The fiber length of the fibers used for the inorganic fiber member 16 is not particularly limited as long as it does not interfere with production, and can be, for example, 0.1 mm to 5 mm, preferably 0.5 mm to 3 mm, and more preferably 1 mm to 2 mm.

The porosity of the inorganic fiber member 16 (the proportion of the inorganic fibers 20 in the inorganic fiber member 16) is not particularly limited, but can be, for example, 20% to 80%, more preferably 30 to 70%, and still more preferably 40% to 60%. In such ranges, the inorganic fiber member 16 having rigidity can be formed. In addition, the heat storage material 18 can spread throughout the inside of the inorganic fiber member 16, and the heat storage material 18 can tightly adhere to the fiber surfaces constituting the inorganic fiber member 16 in a wide area. As a result, the heat storage unit can efficiently store and dissipate heat into and from the heat storage material 18 via the inorganic fiber member 16.

The porosity is a ratio of a space where no fiber is present with respect to the volume of the fiber sheet, and is calculated from the volume and mass of the fiber sheet and the density of the fiber material as in the following Formula (1).

Porosity (%) = (1 - mass of fiber sheet/(volume of fiber sheet $\times$ density of fibers)) $\times$ 100          Formula (1)

The porosity can be adjusted by the thickness and amount of the fibers to be used, the density of the material in which the fibers are entangled, or the pressure applied during compression molding.

The amount of the inorganic fiber member 16 in the storage space 30 of the storage body 14 can be expressed by a space factor. The space factor of the inorganic fiber member 16 is preferably 30 to 70 vol% (storage body occupancy ratio), assuming that a space factor of 100 vol% is a state in which the storage space 30 is filled with the inorganic fiber member 16 without any gaps.

In the temperature equalizing unit 10 of the first embodiment, the inorganic fiber member 16 stored in the storage space 30 has a cylindrical block shape. The dimension of each portion in the cylindrical inorganic fiber member 16 is determined in relation to the dimension of each portion partitioning the storage space 30 to satisfy the condition of the space factor of 30 to 70% (storage body occupancy ratio).

In the example described above, the inorganic fiber member 16 is composed of only the inorganic fibers 20, but may be composed of fibers other than the inorganic fibers 20.

The inorganic fibers 20 are not particularly limited as long as they are inorganic fibers. Examples of the inorganic fibers 20 include single metal fibers such as copper, silver, gold, platinum, aluminum, nickel, chromium, and tungsten; alloy fibers such as stainless steel, copper alloys, tungsten alloys, and chromium alloys; glass fibers; alumina fibers; graphite fibers; carbon fibers; silica fibers; boron fibers, and the like. These fibers can be used in a single type or in combination of two or more types. In particular, as the inorganic fibers 20, metal fibers and alloy fibers having high thermal conductivity are preferable, and copper, silver, aluminum, stainless steel, and copper alloys are more preferable.

«Heat Storage Material 18»

The inorganic fiber member 16 is stored, together with heat storage material 18, in the storage space 30 of the storage body 14. The heat storage material 18 according to the present embodiment exchanges heat with a heat medium (here, the water 28) via the inorganic fiber member 16, and stores and dissipates heat. The heat storage material 18 may be of a sensible heat storage type, a latent heat storage type, or a chemical heat storage type, and is not particularly limited.

The sensible heat storage-type heat storage material 18 has a low heat storage efficiency because of its relatively low heat storage density, but is very excellent in terms of stability, safety, price, ease of handling, and durability. The latent heat storage-type heat storage material 18 has a high heat storage density and an excellent heat storage efficiency, and is very excellent in stability, safety, price, ease of handling, and durability. The chemical heat storage-type heat storage material 18 has a very high heat storage density and a very excellent heat storage efficiency, but is low in stability, safety, price, ease of handling, and durability. Therefore, in the temperature equalizing unit 10 of the first embodiment, the latent heat storage-type heat storage material 18 can be preferably used. In addition, the heat storage temperature and the heat storage energy can be controlled by adjusting the components of the heat storage material and the mixing ratio thereof.

The latent heat storage-type heat storage material 18, which is a preferable example, can be one that stores heat applied to the heat storage material 18 as latent heat when a solid-liquid phase transition occurs, or one that stores heat as latent heat when a solid-solid phase transition occurs.

Examples of the heat storage material 18 using the latent heat of the solid-liquid phase transition include: single-component heat storage materials such as water (ice), paraffin-based materials, organic solvents (aliphatic hydrocarbon, aromatic hydrocarbon, alcohol, ether, ester, and the like), inorganic salts such as alkali metal hydroxides, magnesium hydroxide, beryllium hydroxide, alkaline earth metal hydroxides, and nitrates, and inorganic hydrated salts such as sodium acetate trihydrate; and mixtures of a plurality of components such as mixtures of inorganic salts or inorganic hydrates such as a mixture of magnesium nitrate hexahydrate and magnesium chloride hexahydrate, mixtures of organic compounds such as a mixture of lauric acid and capric acid, and mixtures of inorganic salts and organic compounds such as a mixture of ammonium nitrate and urea. As the paraffin-based material, for example, a paraffin wax, which is an n-paraffin-based heat storage material, or a material including an elastomer and a paraffin wax can be used.

The heat storage material 18 using the latent heat of the solid-liquid phase transition can be used for the temperature equalizing unit 10 of the first embodiment, for example, by applying heat to the heat storage material 18 using the latent heat of the solid-liquid phase transition to form a liquid phase, impregnating the inorganic fiber member 16 according to the first embodiment with the heat storage material 18 or immersing the inorganic fiber member 16 in the liquid-phase heat storage material 18, and then lowering the temperature to form the heat storage material 18 in solid phase to embed the inorganic fiber member 16 in the heat storage material 18.

Examples of the heat storage material 18 using the latent heat of the solid-solid phase transition include organic compounds such as polyethylene glycol copolymer cross-linked bonds; transition metal ceramics such as $LiMnO_4$, $LiVS_2$, $LiVO_2$, $NaNiO_2$, $LiRh_2O_4$, $V_2O_3$, $V_4O_7$, $V_6O_{11}$, $Ti_4O_7$, $SmBaFe_2O_5$, $EuBaFe_2O_{45.5}$, $GdBaFe_2O_5$, $TbBaFe_2O_5$, $DyBaFe_2O_5$, $HoBaFe_2O_5$, $YBaFe_2O_5$, $PrBaCo_2O_{5.5}$, $DyBaCo_2O_{5.54}$, $HoBaCo_2O_{5.48}$, and $YBaCo_2O_{5.49}$; and vanadium dioxide ($VO_2$) in which vanadium has been partially substituted with a metal such as niobium (Nb), molybdenum (Mo), ruthenium (Ru), tantalum (Ta), tungsten (W), rhenium (Re), osmium (Os), or iridium (Ir) The vanadium dioxide in which vanadium is partially substituted with the above-mentioned metal is a compound that can be expressed as $V1-xMxO_2$ where M is a substituted metal, and x is an amount of substituted M. Here, x is a decimal number greater than 0 and smaller than 1.

The heat storage material 18 using the latent heat of the solid-solid phase transition can be used for the temperature equalizing unit 10 of the first embodiment, for example, by making the heat storage material 18 using the latent heat of the solid-solid phase transition into a powder, and filling or carrying the powder in the inorganic fiber member 16 according to the first embodiment, or embedding the inorganic fiber member 16 in the powdered heat storage material 18

Furthermore, the heat storage material 18 using the latent heat of the solid-solid phase transition can be used as a sheet-like or block-like lump material by being laminated on or brought into contact with the inorganic fiber member 16.

«Basic Function of Temperature Equalizing Unit 10»

In the temperature equalizing unit 10 of the first embodiment, each of the inorganic fiber member 16 and the heat storage material 18 exhibits a temperature equalizing function. Figs. 4(a) and 4(b) schematically illustrate an example of use of the temperature equalizing unit 10 according to the present embodiment and a function of the temperature equalizing unit 10.

Fig. 4(a) illustrates an example of use of the temperature equalizing unit 10. In the example of use of Fig. 4(a), the temperature equalizing unit 10 is installed inside a mounting device 40 where the temperature equalizing unit 10 is mounted. Examples of the mounting device 40 include various types of industrial equipment requiring precise temperature controls. Examples of the industrial equipment include various types of semiconductor manufacturing equipment, ultra-precision processing equipment, optical equipment, power supply equipment, bioreactors, and the like.

The mounting device 40 includes a precise temperature control portion 42 that requires temperature management. The water 28, which is a heat medium, is supplied to the precise temperature control portion 42 from a temperature controller (temperature control device) 44 via a pipe 46. The precise temperature control portion 42 is cooled by the water 28, and the water 28 that has cooled the precise temperature control portion 42 returns to the temperature controller 44 via a return pipe (not illustrated). In this manner, the water 28 circulates between the temperature controller 44 and the mounting device 40 to manage the temperature of the precise temperature control portion 42 in the mounting device 40.

The temperature equalizing unit 10 is disposed on a path for supplying water 28, and is located at a stage before the precise temperature control portion 42. The disposition of the temperature equalizing unit 10 is preferably determined such that the function of the temperature equalizing unit 10 is sufficiently exerted.

For example, if the temperature equalizing unit 10 is disposed at a position sufficiently close to the precise temperature control portion 42, water can be supplied to the precise temperature control portion 42 while maintaining the temperature of the water output from the temperature equalizing unit 10. However, if the temperature equalizing unit 10 is disposed too close to the precise temperature control portion 42, the temperature equalizing unit 10 may be affected by heat from the precise temperature control portion 42. Considering these circumstances, it is preferable to determine the disposition of the temperature equalizing unit 10. Note that a heat insulating member may be disposed between the temperature equalizing unit 10 and the precise temperature control portion 42 to prevent an influence of heat from the precise temperature control portion 42.

Fig. 4(b) illustrates the function of the temperature equalizing unit 10 by schematic temperature change waveforms. In Fig. 4(b), an outer waveform having a large amplitude (hunting) indicates a temperature change (a change in In temperature) of the water 28 input to the temperature equalizing unit 10, and an inner waveform having a small amplitude indicates a temperature change (a change in Out temperature) of the water 28 in the temperature equalizing unit 10. The center of the waveform is a center temperature (average temperature).

In a case where the temperature change amount of the water 28 (an amplitude of one of the temperature waveforms) is $\Delta T1i$ in the temperature controller 44, the temperature change amount of the water 28 is $\Delta T_2i$, which is smaller than $\Delta T_1i$ by the functions of the inorganic fiber member 16 and the heat storage material 18 illustrated in Fig. 1, in the temperature equalizing unit 10. When the equalization rate in the temperature equalizing unit 10 is denoted by $\eta$, the equalization rate $\eta$ is expressed by the following Formula (2).

$$\eta=(\Delta T_1i-\Delta T_2i)/\Delta T_1i \qquad \text{Formula (2)}$$

For example, in a case where the inorganic fiber member 16 and the heat storage material 18 are determined based on Formula (2) such that $\eta$ is 60%, if $\Delta T1i$ is 20 [mK (milliKelvin)], $\Delta T_2i$ is 8(=(20-8)/20) [mK]. Here, the temperature change amount for one amplitude is used, but the equalization rate $\eta$ can be similarly obtained even when the temperature change amounts for both amplitudes are used.

In this manner, by reducing the temperature change amount of the water 28 in the temperature equalizing unit 10, and temperature of the water 28 is equalized. Then, the water 28 of which the temperature has been equalized is supplied to the precise temperature control portion 42, so that the temperature change amount in the precise temperature control portion 42 is kept at a small value.

«Effect of Heat Storage Material 18»

Table 1 shows examples and comparative examples related to the temperature equalizing unit 10 using the heat storage material 18 (and the inorganic fiber member 16).

[Table 1]

| | | EXAMPLE 1 | EXAMPLE 2 | EXAMPLE3 | COMPARATIVE EXAMPLE 1 | COMPARATIVE EXAMPLE 2 | COMPARATIVE EXAMPLE 3 | | EXAMPLE 4 | EXAMPLE5 | EXAMPLE 6 | | EXAMPLE 7 | EXAMPLE 8 | EXAMPLE 9 | EXAMPLE 10 | EXAMPLE 11 |
|---|---|---|---|---|---|---|---|---|---|---|---|---|---|---|---|---|---|
| | EMBODIMENT | 1 | 1 | 1 | 1 | 1 | 1 | | 2 | 3 | 4 | | 5 | 5 | 5 | 5 | 5 |
| INORGANIC FIBER MEMBER | HEAT STORAGE MATERIAL UNIT | PRESENT | PRESENT | PRESENT | PRESENT | PRESENT | PRESENT | | PRESENT | PRESENT | PRESENT | | PRESENT | PRESENT | PRESENT | PRESENT | PRESENT |
| | PRESENCE/ABSENCE | PRESENT | PRESENT | PRESENT | PRESENT | PRESENT | PRESENT | | PRESENT | PRESENT | PRESENT | | PRESENT | PRESENT | PRESENT | PRESENT | PRESENT |
| | VOLUME (%) | 51 | 32 | 69 | - | - | 27 | | 50 | 52 | 51 | | 51 | 51 | 52 | 53 | 51 |
| | | | | | | | | | | | | | | | | | |
| HEAT STORAGE MATERIAL | MELTING POINT (°C) | 47.10 | 47.10 | 47.10 | 47.10 | 47.10 | 47.10 | | 47.10 | 47.10 | 47.10 | | 47.10 | 47.58 | 50.22 | 51.67 | 51.66 |
| NOTE | TEMPERATURE DIFFERENCE (°C) FROM IN | 0.03 | 0.02 | 0.01 | 0.02 | 0.04 | 0.03 | | 0.01 | 0.01 | 0.02 | | 0.54 | 0.05 | 0.01 | 1.44 | 1.58 |
| | | | | | | | | | | | | | | | | | |
| IN | AVERAGE TEMPERATURE (°C) | 47.13 | 47.12 | 47.11 | 47.12 | 47.14 | 47.13 | | 47.11 | 47.11 | 47.12 | | 47.64 | 47.63 | 50.23 | 53.11 | 53.24 |
| | HUNTING (± °C) | 1.25 | 1.25 | 1.25 | 1.26 | 1.24 | 1.25 | | 1.24 | 1.25 | 1.26 | | 1.24 | 1.24 | 1.25 | 1.23 | 1.25 |

(continued)

|  |  | EXAMPLE 1 | EXAMPLE 2 | EXAMPLE3 | COMPARATIVE EXAMPLE 1 | COMPARATIVE EXAMPLE 2 | COMPARATIVE EXAMPLE 3 | EXAMPLE 4 | EXAMPLE5 | EXAMPLE 6 | EXAMPLE 7 | EXAMPLE 8 | EXAMPLE 9 | EXAMPLE 10 | EXAMPLE 11 |
|---|---|---|---|---|---|---|---|---|---|---|---|---|---|---|---|
| OUT | AVERAGE TEMPERATURE (°C) | 47.13 | 47.12 | 47.10 | 47.12 | 47.14 | 47.12 | 47.11 | 47.11 | 47.12 | 47.63 | 47.63 | 50.22 | 53.11 | 53.23 |
|  | HUNTING (± °C) | 0.060 | 0.602 | 0.048 | 1.251 | 0.920 | 0.647 | 0.048 | 0.035 | 0.061 | 0,241 | 0.043 | 0.031 | 0.580 | 0.610 |
|  | DECREASE AMOUNT | 1.19 | 0.65 | 1.21 | 0.01 | 0.32 | 0.60 | 1.19 | 1.22 | 1.20 | 1.00 | 1.20 | 1.22 | 0.65 | 0.64 |
|  | IMPROVEMENT RATE X | 95.21 | 51.96 | 96.17 | 0.71 | 25.81 | 48.24 | 96.13 | 97.20 | 95.16 | 80.56 | 96.53 | 97.53 | 52.85 | 51.32 |

Table 1 shows results of examples and comparative examples related to the temperature equalizing unit 10 of the first embodiment. Table 1 also shows results of examples and comparative examples according to temperature equalizing units of the second to fifth embodiments (to be described below). In Table 1, the results of the examples according to the first embodiment are indicated by data in columns in which "1" is described in a row for "embodiment", which is a second row from the top of Table 1. "2" to "5" in the row for "embodiment" correspond to the second to fifth embodiments.

In Table 1, columns for items "inorganic fiber member", "heat storage material", "note", "IN", and "OUT" are provided on the front side (at the left end in the table). Among these items, for the "inorganic fiber member", rows for "heat storage material unit", "presence/absence", and "volume (%)" are provided. The "heat storage material unit" corresponds to the storage body 14 in each embodiment. In the row for "heat storage material unit", it is described whether the "heat storage material unit" is present or absent in each of the examples and the comparative examples.

In the next row for "presence/absence", it is described whether an inorganic fiber member (the inorganic fiber member 16 or the like) is present or absent in each of the examples and the comparative examples. In the next row for "volume", a volume of an inorganic fiber member (the inorganic fiber member 16 or the like) is described. The volume is a volume converted to a bulk density. Regarding this "volume", the space factor of the inorganic fiber member described above is actually 50 to 70%. Therefore, for example, even if the space factor is 70% and the volume is 99%, the value will be 69 vol% (storage body occupancy ratio) is obtained.

In the next row for "heat storage material", a "melting point (°C)" of the used heat storage material is described. In the next row for "note", "temperature difference (°C) from IN" is described. The "temperature difference (°C) from IN" means a temperature difference between an input temperature (In temperature), which is a temperature of water flowing into (input to) the temperature equalizing unit, and a "melting point (°C)".

The following "IN" means the above-described In temperature. For this "IN", rows for "average temperature (°C)" and "hunting (±°C)" are provided. The meanings of the "average temperature (°C)" and the "hunting (±°C)" are the same as the meanings of the "average temperature" and the "hunting" described with reference to Fig. 4(b).

The following "OUT" means an output temperature (Out temperature), which is a temperature of water flowing out from (output from) the temperature equalizing unit. Regarding this "OUT", rows for "average temperature (°C)", "hunting (±°C)", "decrease amount", and "equalization rate η" are provided. The meanings of the "average temperature (°C)" and the "hunting (±°C)" are the same as those in the case of "IN". The "equalization rate η" is referred to as an "improvement rate X", and may be expressed as a numerical value of 1/X.

The "decrease amount" indicates a value obtained by subtracting the "hunting (±°C)" of "OUT" from the "hunting (±°C)" of "IN". The "equalization rate η" can be calculated using the above-described Formula (2), but can also be calculated by the following Formula (3).

$$\eta = ((\text{hunting IN} - \text{hunting OUT})/(\text{hunting IN})) \times 100 \qquad \text{Formula (3)}$$

The "hunting IN" is a "hunting (±°C)" of "IN", and the "hunting OUT" is a "hunting (±°C)" of "OUT".

In Example 1 related to the first embodiment, regarding the "inorganic fiber member", the "heat storage material unit" is "present", the "presence/absence" is "present", and the "volume (%)" is "51". Regarding the "heat storage material", the "melting point (°C)" is "47.10". The "temperature difference (°C) from IN" in the "note" is "0.03". Regarding "IN", the "average temperature (°C)" is "47.13" and the "hunting (±°C)" is "1.25". Regarding the "OUT", the "average temperature (°C)" is "47.13", and the "hunting (±°C)" is "0.060". The "decrease amount" is "1.19", and the "equalization rate η" is "95.21". The "average temperature (°C)" is a value obtained by performing a measurement after a fluid (here, water) flows for 60 minutes.

In Comparative Example 1 related to the first embodiment, both the "heat storage material unit" and the "presence/absence" relating to the inorganic fiber member are "absent". Comparing Example 1 and Comparative Example 1, the "decrease amount" and the "equalization rate η" in Example 1 are "1.19" and "95.21", whereas the "decrease amount" and the "equalization rate η" in Comparative Example 1 are "0.01" and "0.71". As described above, by using the "heat storage material unit", the temperature equalization characteristics are significantly improved.

«Effect of Inorganic Fiber Member 16»

Table 1 shows data for Comparative Example 2, in which the "inorganic fiber member" is "absent" in relation to the first embodiment. Comparing Example 1 and Comparative Example 2, the "decrease amount" and the "equalization rate η" in Example 1 are "1.19" and "95.21", whereas the "decrease amount" and the "equalization rate η" in Comparative Example 2 are "0.32" and "25.81". In a case where the "inorganic fiber member" is "absent", the "equalization rate η" decreases to below 50. Therefore, by using the "inorganic fiber member", the temperature equalization characteristics can be significantly improved.

«Effect of Temperature Equalizing Unit 10»

As described above, a temperature of a heat medium (here, the water 28) can be equalized by using the temperature equalizing unit 10. In the temperature equalizing unit 10, the heat of the heat storage material 18 is transferred to the water 28 to keep the water 28 at a constant temperature. The temperature equalization rate $\eta$ gradually approaches a target value. The heat storage material 18 suitable for the target temperature is selected, according to a relationship with a temperature of the water 28 input to the temperature equalizing unit 10, a target equalization temperature (target temperature), and the like, to equalize the temperature.

<Improvement in Thermal Conductivity by Addition of Inorganic Fiber Member 16>

The temperature equalization effect is also obtained when only the heat storage material 18 is used. Furthermore, by using the inorganic fiber member 16 in addition to the heat storage material 18, the temperature equalization effect is further enhanced.

Specifically, the heat storage material 18 maintains a constant temperature by using an amount of heat absorbed or released when unit weight of substance undergoes a phase transition. Figs. 5(a) and 5(b) are enlarged views each schematically illustrating a portion at a boundary with the heat storage material 18 in the storage body 14. In the example of Fig. 5(a), the inorganic fiber member 16 is not used, and in the example of Fig. 5(b), the inorganic fiber member 16 is used. In the examples of Figs. 5(a) and 5(b), a type of heat storage material using latent heat of solid-liquid phase transition is used as the heat storage material 18.

In both the cases of Figs. 5(a) and 5(b), the heat of the water 28 is transferred to the heat storage material 18 via the storage body 14 (not illustrated in Figs. 5(a) and 5(b)) and the inner wall 24 of the passage tube 13. An interface 39 of the heat storage material 18 is melted, and the interface 39 becomes a state in which a solid phase and a liquid phase are mixed. As the heat storage material 18 melts, the thermal conductivity decreases at the interface 39. That is, the efficiency of transfer of heat inside the heat storage material 18 to the interface 39 located on the surface layer decreases, and the transfer (supply) of heat to the interface 39 does not keep up, resulting in a liquid phase at the interface 39. The liquid phase acts as a thermal resistor.

On the other hand, as illustrated in Fig. 5(b), by using the inorganic fiber member 16 and bringing the inorganic fiber member 16 into thermal contact with housing portions such as the storage body 14 (not illustrated in Figs. 5(a) and 5(b)) and the inner wall 24 of the passage tube 13, the thermal conductivity is improved, and the efficiency of transfer of heat inside the heat storage material 18 is improved. As a result, it is possible to prevent a liquid phase from being generated at the interface 39, which would otherwise cause the interface 39 to be thermally resistant. By joining the inorganic fiber member 16 and the storage body 14 (not illustrated in Figs. 5(a) and 5(b)) by a thermal fusion bonding method or the like, heat is more easily transferred.

For example, in a case where the heat conductivity of the heat storage material 18 is about 0.2 [W/m·K], the heat conductivity can be increased to about 3 [W/m·K] by combining the inorganic fiber member 16 with the heat storage material 18.

<Temperature Equalizing Unit 60 of Second Embodiment>

Next, a second embodiment will be described with reference to Fig. 6(a). Note that parts similar to those in the first embodiment are denoted by the same reference numerals, and description thereof will be omitted as appropriate. Fig. 6(a) schematically illustrates a temperature equalizing unit 60 according to the second embodiment. In the temperature equalizing unit 60 of the second embodiment, the storage space 30 of the storage body 14 is filled with the inorganic fiber member 16 and the heat storage material 18 as in the first embodiment. The space factor (storage body occupancy ratio) of the inorganic fiber member 16 in the storage space 30 is 30 to 70 vol%.

Further, the temperature equalizing unit 60 of the second embodiment includes a heat medium contact body with which a heat medium (here, water 28) is in contact in the passage 12. In the example of Fig. 6(a), the heat medium contact body is an inorganic fiber member 62. The inorganic fiber member 62 is processed into an elongated pin shape. The pin-shaped inorganic fiber member 62 is also integrated with the heat storage material 18. A plurality of inorganic fiber members 62 are provided in the passage 12 so as to cross the passage 12. The number of pin-shaped inorganic fiber members 62 may be, for example, from several to several thousand, depending on the relationship between their size (diameter or the like) and the size of the passage 12.

The water 28 flows between the inorganic fiber members 62. The inorganic fiber member 62 may be provided in the passage 12 in any manner as long as the water 28 can flow in the passage 12. As in the example of Fig. 6(a), in a case where the inorganic fiber member 62 has a pin shape, the inorganic fiber member 62 may be fixed (thermally bonded or the like) to the inner peripheral surface of the passage 12 (here, the inner peripheral surface of the inner wall 24 of the passage tube 13) so as to protrude inward into the passage 12. The inorganic fiber member 62 may be filled in the passage 12 in a non-fixed state at a certain position. However, the fixation of the inorganic fiber member 62 to the inner peripheral surface of the passage 12 can ensure contact between them, making it easier to increase the thermal conductivity.

In a case where the inorganic fiber member 62 is not fixed in the passage 12, an outflow prevention means such as a filter can be provided before the outlet of the water 28 to prevent the inorganic fiber member 62 from being discharged to the outside of the temperature equalizing unit 60 together with the water 28. Even in a case where the inorganic fiber member 62 is fixed in the passage 12, an outflow prevention means such as a filter may be provided, taking into account that the inorganic fiber member 62 may fall off.

Although not illustrated, the shape of the inorganic fiber member 62 in the passage 12 is not limited to a pin shape, and may be, for example, a sheet shape or a block shape. In a case where the inorganic fiber member 62 has a sheet shape, for example, the inorganic fiber member 62 can be rolled up to have a cross section in a circular shape or a spiral shape, and disposed in the passage 12 in an inserted manner.

The shape of the inorganic fiber member 62 in the passage 12 may be a propeller shape or the like instead of the pin shape. By forming the inorganic fiber member 62 having a propeller shape, it is possible to prevent a decrease in flow rate of the water 28 caused by the inorganic fiber member 62 in the passage 12.

Here, in the second embodiment, the inorganic fiber members 16 and 62 and the heat storage material 18 are integrated, but only shading indicating the inorganic fiber members 16 and 62 is added in Fig. 6(a) to avoid complicating the illustration.

According to the temperature equalizing unit 60 of the second embodiment described above, by providing the heat medium contact body (here, the inorganic fiber member 62 and the like) with which the heat medium (here, the water 28) is in contact in the passage 12, the inorganic fiber member 62 can be brought into direct contact with the water 28. Therefore, heat exchange can also be performed inside the passage 12 by the inorganic fiber member 62.

In addition, since the inorganic fiber member 62 has a pin shape, the contact area between the inorganic fiber member 62 and the water 28 can be as large as possible. By disposing the inorganic fiber member 62 in the passage 12, the flow rate of the water 28 is reduced, but heat exchange can be efficiently performed. Note that specific temperature equalization characteristics of the temperature equalizing unit 60 according to the second embodiment will be described in comparison with other embodiments after the fourth embodiment is described.

Figs. 6(b) and 6(c) illustrate other examples related to the disposition of the inorganic fiber member 16 in the storage space 30 of the storage body 14. Figs. 6(b) and 6(c) illustrate only a part of the storage body 14 (for example, only the upper side in Fig. 6(a)).

In the example of Fig. 6(b), the inorganic fiber member 16 is integrated with the heat storage material 18, and the inorganic fiber member 16 and the heat storage material 18 are disposed only in a portion near the passage 12 of the storage space 30. Avoid portion 32, which is not filled with the inorganic fiber member 16 and the heat storage material 18, is formed in an outer peripheral portion of the storage space 30. Such disposition of the inorganic fiber member 16 (and the heat storage material 18) in the storage space 30 can also be appropriately adopted in other embodiments including the first embodiment.

In the example of Fig. 6(c), a plurality of inorganic fiber members 64 formed in a pin shape are arranged similarly to the inorganic fiber members 62. The inorganic fiber members 64 are integrated with the heat storage material 18. A void portion 66 is formed around the inorganic fiber member 64. The inorganic fiber member 64 is provided in the storage space 30 so as to cross the storage space 30. The inorganic fiber member 64 in the storage space 30 is fixed to an inner wall surface of the storage space 30 so that heat can be transferred. Such disposition of the pin-shaped inorganic fiber member 64 (and the heat storage material 18) in the storage space 30 can also be appropriately adopted in other embodiments including the first embodiment.

<Temperature Equalizing Unit 70 of Third Embodiment>

Next, a third embodiment will be described with reference to Fig. 7. Note that parts similar to those in each of the embodiments described so far are denoted by the same reference numerals, and description thereof will be omitted as appropriate. Fig. 7 schematically illustrates a temperature equalizing unit 70 according to the third embodiment. In the temperature equalizing unit 70 of the third embodiment, a plurality of pin-shaped inorganic fiber members 62 are provided in the passage 12 as in the second embodiment.

Also, a plurality of pin-shaped inorganic fiber members 72 are provided in the storage space 30 of the storage body 14. In the example of Fig. 7, the inorganic fiber member 72 is provided in the storage space 30 so as to cross the storage space 30. The inorganic fiber member 72 in the storage space 30 is fixed to an inner wall surface of the storage space 30 so that heat can be transferred. The heat storage material 18 is filled around the inorganic fiber member 72 in the storage space 30.

In the example of Fig. 7, the inorganic fiber member 62 in the passage 12 and the inorganic fiber member 72 in the storage space 30 are illustrated to be aligned in the same straight line, but the inorganic fiber members 62 and 72 are not necessarily aligned in the same straight line. In addition, the inorganic fiber member 72 may be filled in the storage space 30 in a non-fixed state at a certain position. Further, the inorganic fiber member 72 may be disposed such that a space factor (storage body occupancy factor) of the inorganic fiber member 72 in the storage space 30 is 30 to 70 vol%.

In addition, the inorganic fiber members 62 and 72 may be integrated with the heat storage material 18, or may be disposed alone.

According to the temperature equalizing unit 70 of the third embodiment described above, by providing the pin-shaped inorganic fiber member 72 in the storage space 30, heat can be transferred to and from the passage tube 13 via the pin-shaped inorganic fiber member 72 in the storage space 30. Note that specific temperature equalization characteristics of the temperature equalizing unit 70 according to the third embodiment will be described in comparison with other embodiments after the fourth embodiment is described.

<Temperature Equalizing Unit 80 of Fourth Embodiment>

Next, a fourth embodiment will be described with reference to Fig. 8. Note that parts similar to those in each of the embodiments described so far are denoted by the same reference numerals, and description thereof will be omitted as appropriate. Fig. 8 schematically illustrates a temperature equalizing unit 80 according to the fourth embodiment. In the temperature equalizing unit 80 of the fourth embodiment, the storage space 30 of the storage body 14 is filled with the inorganic fiber member 16 and the heat storage material 18 as in the first embodiment. The space factor (storage body occupancy ratio) of the inorganic fiber member 16 in the storage space 30 is 30 to 70 vol%.

In addition, an inorganic fiber member 82 is also disposed in the passage 12. The shape of the inorganic fiber member 82 in the passage 12 is a circular column shape corresponding to the shape of the passage 12. The inorganic fiber member 82 is in contact with the inner periphery of the passage 12 (the inner peripheral surface of the passage tube 13) so that heat can be exchanged. The inorganic fiber member 82 is not combined (integrated) with the heat storage material 18.

According to the temperature equalizing unit 80 of the fourth embodiment described above, by providing the heat medium contact body (here, the inorganic fiber member 82) with which the heat medium (here, the water 28) is in contact in the passage 12 as in the second embodiment (Fig. 6(a)) and the third embodiment (Fig. 7), the inorganic fiber member 82 can be brought into direct contact with the water 28. Therefore, heat exchange can also be performed inside the passage 12 by the inorganic fiber member 62. Note that specific temperature equalization characteristics of the temperature equalizing unit 80 according to the fourth embodiment will be described below in comparison with other embodiments (the second embodiment and the third embodiment).

<Comparison Between Characteristics of First to Third Embodiments>

Next, the temperature equalization characteristics of the temperature equalizing units 10, 60, and 70 according to the first to third embodiments will be compared with reference Fig. 9 and Table 1 described above. Fig. 9 schematically illustrates a configuration of an experimental apparatus used in an experiment for comparing temperature equalization characteristics (hereinafter referred to as "first experimental example"). In Fig. 9, a pipe 90, a valve 92, a flowmeter 94, an input temperature sensor 96, and an output temperature sensor 98 are illustrated. The temperature equalizing unit 10, 60, or 70 of each of the embodiments is installed at a sequentially replaced manner at a position between the input temperature sensor 96 and the output temperature sensor 98 in the pipe 90. Fig. 9 illustrates a state in which the temperature equalizing unit 10 of the first embodiment is installed.

Arrows A and B in Fig. 9 indicate a flow of water, and the water flows from the left side to the right side in Fig. 9 when the valve 92 is opened. The flow rate (Q[L/min]) of water is detected by the flowmeter 94. The temperature of the water flowing into the temperature equalizing unit 10, 60, or 70 is detected by the input temperature sensor 96, and the temperature of the water flowing out from the temperature equalizing units 10, 60, and 70 is detected by the output temperature sensor 98.

The results of Example 1, Example 4, and Example 5 indicated in Table 1 above are results of examining equalization rates $\eta$ of the temperature equalizing units 10, 60, and 70 according to the first to third embodiments using the experimental apparatus of Fig. 9.

In Example 1, Example 4, and Example 5, the temperature equalizing units 10, 60, and 70 were installed in a replaced manner, and the flow rate of water was changed by 0.5 [L/min] between 0.50 to 3.00 [L/min] in the same manner for each of the temperature equalizing units 10, 60, and 70. Furthermore, temperature change amounts ($\Delta T_1 i$ and $\Delta T_2 i$) were obtained from detection results of the input temperature sensor 96 and the output temperature sensor 98, and the obtained temperature change amounts were substituted into the above-described Formula (2) to calculate an equalization rate $\eta$.

The equalization rate $\eta$ in Example 1 was "95.21", and the equalization rates $\eta$ in Example 4 and Example 5 were "96.13" and "97.20", respectively. $\eta$ in Example 4 increased by about 1% as compared with that in Example 1, and $\eta$ in Example 5 increased by 2% or more as compared with that in Example 1. According to the results of Examples 4 and 5, $\eta$ is improved by providing the pin-shaped inorganic fiber member 62 or 72 in the passage 12 or the storage body 14.

<Comparison Between Characteristics of Second to Fourth Embodiments>

The results of Example 4, Example 5, and Example 6 indicate a result of an experiment (second experimental example) in which equalization rate η in the temperature equalizing units 60, 70, and 80 according to the second to fourth embodiments are compared. In the second experimental example, the temperature equalizing units 60, 70, and 80 according to the second to fourth embodiments were sequentially replaced, and equalization rates η were calculated using the same experimental apparatus (Fig. 9) as in the first experimental example.

In the experiment, the temperature equalizing units 60, 70, and 80 were installed in a replaced manner. The flow rate of water was changed by 0.5 [L/min] between 0.50 to 3.00 [L/min] for each of the temperature equalizing units 60, 70, and 80. Furthermore, the temperature change amounts ($\Delta T_1 i$ and $\Delta T_2 i$) were obtained from detection results of the input temperature sensor 96 and the output temperature sensor 98, and the obtained temperature change amounts were substituted into the above-described Formula (2) Formula to calculate an equalization rate η.

The equalization rate η in Example 4 was "96.13", and the equalization rate η in Example 5 was "97.20". The equalization rate η in Example 6 was "95.16". η in Example 5 increased by 1% or more as compared with that in Example 4, and η in Example 6 decreased by about 1 to 2% as compared with those in Example 4 and Example 5.

<Temperature Equalizing Unit 100 of Fifth Embodiment>

Next, a temperature equalizing unit 100 according to a fifth embodiment will be described with reference to Figs. 10 and 11. Note that parts similar to those in each of the embodiments described so far are denoted by the same reference numerals, and description thereof will be omitted as appropriate. Fig. 10 schematically illustrates a temperature equalizing unit 100 according to the fifth embodiment.

The temperature equalizing unit 100 of the fifth embodiment has a structure in which a plurality of passage pipes 102 are added to the temperature equalizing unit 80 of the fourth embodiment (Fig. 8). In the temperature equalizing unit 100 of the fifth embodiment, a plurality of passages 12 are provided by the passage pipes 102.

In the example of Figs. 10 and 11, although simply illustrated, the plurality of passage pipes 102 are provided in parallel. The number of passage pipes 102 can be, for example, about several to several thousand. Figs. 10 and 11 illustrate an example in which the number of passage pipes 102 is 25 (=5×5). A passage 12 is formed in each of the passage pipes 102. The diameter of the passage 12 (the inner diameter of the passage pipe 102) can be, for example, about 2 mm (φ2).

The passage pipe 102 is surrounded by the integrated inorganic fiber member 16 and heat storage material 18. The space factor (storage body occupancy ratio) of the inorganic fiber member 16, excluding the portion occupied by the passage pipes 102, within the range of the dimension L occupied by the inorganic fiber member 16 (and the heat storage material 18), is 30 to 70 vol%.

In the example of Figs. 10 and 11, a passage tube 13A is formed in a rectangular tube shape, and the integrated inorganic fiber member 16 and heat storage material 18 is also processed into a rectangular parallelepiped shape. A storage body 14A also has a rectangular cylindrical shape. However, the passage tube 13A and the storage body 14A may be formed in a circular tube shape or a cylindrical shape as in the other embodiments, and the integrated inorganic fiber member 16 and heat storage material 18 may also be processed into a circular column shape.

Both axial ends of the passage pipe 102 are connected to an input-side rectifying portion 112 and an output-side rectifying portion 114. The input-side rectifying portion 112 and the output-side rectifying portion 114 have a plurality of holes (such as perfect circular holes) through which the heat medium flowing in the passage 12 passes to be guided to the respective passage pipes 102. The input-side rectifying portion 112 and the output-side rectifying portion 114 constitute a plate-like flow regulating body.

In the temperature equalizing unit 100 of the fifth embodiment, the heat medium flowing through the passage 12 is a heat medium that has passed through the input-side rectifying portion 112 that regulates the flow of the heat medium (here, the water 28). The input-side rectifying portion 112 and the output-side rectifying portion 114 only need to be able to adjust the flow of the water 28 flowing through the passage 12. The flow is adjusted, for example, in such a manner as to prevent the water 28 from being turbulent or to make the flow rate uniform in the cross section of the passage 12. For the input-side rectifying portion 112 and the output-side rectifying portion 114, for example, plate-like bodies such as a punching panels can be used.

As the punching panels used for the input-side rectifying portion 112 and the output-side rectifying portion 114, general punching panels can be adopted. As the water 28 passes through the input-side rectifying portion 112 and the output-side rectifying portion 114, the flow of the water is equalized. Then, the water 28 can flow in a laminar manner, making the flow rate of the water 28 uniform. The input-side rectifying portion 112 and the output-side rectifying portion 114 are not limited to the punching panels, and may be, for example, nets having a large number of meshes.

According to the temperature equalizing unit 100 of the fifth embodiment described above, by providing the plurality of passages 12, the passage 12 can be divided into a plurality of sub-divisions. By subdividing the passage 12, the contact area between the passage pipes 102 and the inorganic fiber member 16 and the heat storage material 18 can be increased. As a result, heat exchange can be efficiently performed between the heat medium (here, the water 28) flowing through the passage 12 and the inorganic fiber member 16 and the heat storage material 18.

In addition, by subdividing the passage 12, the flow of the heat medium (here, the water 28) can be easily equalized. This also makes it possible to efficiently exchange heat between the heat medium and the inorganic fiber member 16 and the heat storage material 18.

According to the temperature equalizing unit 100 of the fifth embodiment, the heat medium flowing through the passage 12 is a heat medium that has passed through the input-side rectifying portion 112 and the output-side rectifying portion 114 regulate the flow of the heat medium (here, the water 28). From this, the flow of the heat medium (here, the water 28) can be equalized, and heat exchange can be efficiently performed between the heat medium and the inorganic fiber member 16 and the heat storage material 18.

In a space in a range where the inorganic fiber member 16 is provided, the space factor (storage body occupancy ratio) of the inorganic fiber member 16 is 30 to 70%, so that the inorganic fiber member 16 can efficiently exchange heat with the water 28 in the passage 12, similarly to the inorganic fiber member 16 in the storage space 30 in the first embodiment (Fig. 1), the second embodiment (Fig. 6), and the fourth embodiment (Fig. 8).

When forming the plurality of passages 12, the plurality of passage pipes 102 can be manufactured by three-dimensional molding using a 3D printer or the like.

As well as the multi-pipe structure as illustrated in Figs. 14 and 15, for example, a block structure as illustrated in Fig. 12 may be adopted. In Fig. 16, a plurality of holes are drilled in parallel in a block 116 formed of the inorganic fiber member 16 and the heat storage material 18 to form passages 12. In this case, the passage pipes 102 are not necessary. The block 116 may be processed into a circular column shape.

<Setting of Center Temperature of Heat Storage Material>

In the temperature equalizing unit 10, 60, 70, 80, or 100 of each of the embodiments, it may be desired to set the center temperature of the heat storage material to a desired value. Fig. 4(b) illustrates a center temperature of the heat storage material and a change in center temperature of the heat storage material

Examples 7 to 11 in Table 1 indicate a result of an experiment (third experimental example) in which a change in equalization rate η with respect to a difference between the center temperature (melting point) of the heat storage material and the In temperature.

In Examples 7 to 11, a heat storage material 18 having one of the various mixing ratios was used in a temperature equalizing unit (for example, temperature equalizing unit 10 according to the first embodiment), and the temperature equalizing unit was installed in the experimental apparatus as illustrated in Fig. 11. Then, an equalization rate η was obtained after water 28 flowed into the temperature equalizing unit.

The heat storage material used in each of Examples 7 to 11 and Comparative Examples 1 to 3 was obtained by arbitrarily mixing a paraffin wax having a melting point of 47°C and a paraffin wax having a melting point of 53°C. In this case, the paraffin waxes having different melting points correspond to a first type of material for heat storage (heat storage material) and a second type of material for heat storage (heat storage material), and are mixed at a mixing ratio that makes the temperature of the heat medium (here, the water 28) uniform to a desired value. Not limited to two kinds of heat storage materials, three or more kinds of heat storage materials may be mixed.

The "melting points (°C)" in Examples 7 to 11 were "47.10", "47.58", "50.22", "51.67", and "51.66", respectively. The "temperature differences (°C) from IN" were "0.54", "0.05", "0.01", "1.44", and "1.58", respectively.

With respect to the "melting points (°C)" and the "temperature differences from IN (°C)", the "equalization rates η" were "80.56", "96.53", "97.53", "52.85", and "51.32", respectively.

According to the results of Examples 7 to 11, the equalization rate η can be changed by adjusting the "melting point (°C)" and the "temperature difference (°C) from IN". In particular, a good result was obtained when the difference between the melting point of the heat storage material and the In temperature (temperature difference (°C) from IN) was within the range of 0 to 1.5°C. This can be rephrased that a good result was obtained when the difference between the temperature of the inner wall 24 of the passage 12 and the temperature of the heat medium (the water 28 or the like) was within the range of 0 to 1.5°C. Note that the adjustment described here can be applied to the temperature equalizing units 10, 60, 70, 80, and 100 of the various embodiments.

Note that each of the above-described embodiments is merely a specific example for implementing the present invention, and the technical scope of the present invention is not to be construed as being limited thereby. That is, the present invention can be implemented in various forms without departing from the gist or main features thereof.

Reference Signs List

| 10, 60, 70, 80, 100 | Temperature equalizing unit |
|---|---|
| 12 | Passage |
| 14 | Storage body |
| 16, 62, 72, 82 | Inorganic fiber member |
| 18 | Heat storage material |
| 20 | Inorganic fiber |
| 28 | Water |
| 30 | Storage space |
| 32 | Inlet pipe joint |
| 34 | Outlet pipe joint |
| 39 | Interface |
| 40 | Mounting device |
| 42 | Precise temperature control portion |
| 44 | Temperature controller |
| 46, 90 | Pipe |
| 92 | Valve |
| 94 | Flowmeter |
| 96 | Input temperature sensor |
| 98 | Output temperature sensor |
| 102 | Passage pipe |
| 104 | Unit case |
| 106 | Storage space |
| 112 | Input-side rectifying portion |
| 114 | Output-side rectifying portion |

**Claims**

1. A temperature equalizing unit comprising:

   at least one inorganic fiber member formed by binding or entangling inorganic fibers to have a desired shape;
   a heat storage material contacting the inorganic fiber member; and
   a storage body disposed in contact with a passage through which a heat medium flows, with the inorganic fiber member and the heat storage material being stored therein,
   wherein a volume of the inorganic fiber member in the storage body is 30 to 70 vol%.

2. The temperature equalizing unit according to claim 1, wherein the heat medium flowing through the passage is a heat medium that has passed through a flow regulating body that regulates a flow of the heat medium.

3. The temperature equalizing unit according to claim 1 or 2, wherein a plurality of passages are provided.

4. The temperature equalizing unit according to claim 3, wherein the inorganic fiber member and the heat storage material are disposed between the plurality of passages.

5. The temperature equalizing unit according to any one of claims 1 to 4, wherein

   the heat storage material includes at least a first type of heat storage material and a second type of heat storage material, and
   the first type of heat storage material and the second type of heat storage material are mixed in a mixing ratio for equalizing a temperature of the heat medium to a desired value.

6. The temperature equalizing unit according to any one of claims 1 to 4, wherein a difference between a temperature of an inner wall of the passage and a temperature of the heat medium is within a range of 0 to 1.5°C.

7. The temperature equalizing unit according to claim 1, further comprising a heat medium contact body with which a heat medium is in contact in the passage.

# FIG.1

# FIG.2

# FIG.3

# FIG.4

(a)

MOUNTING DEVICE — 40

44
TEMPERATURE CONTROL PORTION

46

42
PRECISE TEMPERATURE CONTROL PORTION

(b)

HUNTING OF TEMPERATURE

$\Delta T1i$  $\Delta T2i$

CENTER TEMPERATURE (AVERAGE TEMPERATURE)

EP 4 502 519 A1

# FIG.5

(a)

(b)

# FIG.6

(a)

(b)

(c)

# FIG.7

# FIG.8

# FIG.9

# FIG.10

# FIG.11

# FIG.12

## INTERNATIONAL SEARCH REPORT

International application No.

**PCT/JP2023/011327**

### A. CLASSIFICATION OF SUBJECT MATTER

*F28D 1/06*(2006.01)i; *F28D 20/00*(2006.01)i

FI: F28D1/06 B; F28D20/00 Z

According to International Patent Classification (IPC) or to both national classification and IPC

### B. FIELDS SEARCHED

Minimum documentation searched (classification system followed by classification symbols)

F28D1/06; F28D20/00-20/02; C09K5/00-5/20

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | WO 2020/218216 A1 (TOMOEGAWA CO., LTD.) 29 October 2020 (2020-10-29) in particular, paragraphs [0068]-[0084], fig. 12-13 | 1 |
| Y | | 2-7 |
| X | JP 6-82036 B2 (AGENCY OF IND SCIENCE & TECHNOL) 19 October 1994 (1994-10-19) in particular, column 4, lines 16-27, fig. 1 | 1 |
| Y | | 2, 6-7 |
| Y | JP 2014-134329 A (PANASONIC CORP) 24 July 2014 (2014-07-24) in particular, paragraph [0027], fig. 1 | 2-6 |
| Y | JP 8-82493 A (EBARA CORP) 26 March 1996 (1996-03-26) in particular, paragraphs [0002], [0008], fig. 1, 4 | 2-6 |
| Y | WO 2020/217800 A1 (CKD CORPORATION) 29 October 2020 (2020-10-29) in particular, paragraphs [0042]-[0048], fig. 2-4 | 7 |
| A | JP 54-11012 B2 (MITSUI MINING & SMELTING CO) 11 May 1979 (1979-05-11) column 1, line 16 to column 6, line 14 | 1-7 |

☐ Further documents are listed in the continuation of Box C.    ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **16 May 2023** | **30 May 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2023/011327**

| Patent document cited in search report | | | Publication date (day/month/year) | Patent family member(s) | | | Publication date (day/month/year) |
|---|---|---|---|---|---|---|---|
| WO | 2020/218216 | A1 | 29 October 2020 | US | 2022/0187026 | A1 | |
| | | | | in particular, paragraphs [0122]-[0138], fig. 12-13 | | | |
| | | | | EP | 3961141 | A1 | |
| | | | | CN | 113710983 | A | |
| | | | | KR | 10-2021-0153040 | A | |
| | | | | TW | 202100715 | A | |
| JP | 6-82036 | B2 | 19 October 1994 | (Family: none) | | | |
| JP | 2014-134329 | A | 24 July 2014 | (Family: none) | | | |
| JP | 8-82493 | A | 26 March 1996 | (Family: none) | | | |
| WO | 2020/217800 | A1 | 29 October 2020 | US | 2022/0187027 | A1 | |
| | | | | in particular, paragraphs [0058]-[0064], fig. 2-4 | | | |
| | | | | KR | 10-2021-0143834 | A | |
| | | | | CN | 113811833 | A | |
| | | | | TW | 202043694 | A | |
| JP | 54-11012 | B2 | 11 May 1979 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017075773 A